(19) Europäisches Patentamt
European Patent Office
Office européen des brevets

(11) **EP 3 680 302 B1**

(12) **EUROPEAN PATENT SPECIFICATION**

(45) Date of publication and mention
of the grant of the patent:
**09.06.2021 Bulletin 2021/23**

(51) Int Cl.:
*C09J 7/24* (2018.01)    *C08L 27/06* (2006.01)
*C08L 51/04* (2006.01)    *C09D 5/00* (2006.01)
*C09D 151/04* (2006.01)    *C09J 7/38* (2018.01)
*C09J 7/50* (2018.01)    *C08K 5/00* (2006.01)

(21) Application number: **18853390.5**

(22) Date of filing: **01.08.2018**

(86) International application number:
**PCT/JP2018/028909**

(87) International publication number:
**WO 2019/049565 (14.03.2019 Gazette 2019/11)**

(54) **SUBSTRATE FOR PRESSURE-SENSITIVE ADHESIVE TAPE, PRESSURE-SENSITIVE ADHESIVE TAPE, AND PRODUCTION METHOD THEREFOR**

SUBSTRAT FÜR HAFTKLEBEBAND, HAFTKLEBEBAND UND HERSTELLUNGSVERFAHREN DAFÜR

SUBSTRAT POUR RUBAN ADHÉSIF SENSIBLE À LA PRESSION, RUBAN ADHÉSIF SENSIBLE À LA PRESSION ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR KH**

(30) Priority: **08.09.2017 JP 2017172927**

(43) Date of publication of application:
**15.07.2020 Bulletin 2020/29**

(73) Proprietor: **Denka Company Limited**
**Chuo-ku**
**Tokyo 103-8338 (JP)**

(72) Inventors:
• **KIMURA, Akiyoshi**
**Ichihara-city**
**Chiba 290-8588 (JP)**
• **HASUMI, Mizuki**
**Shibukawa-city**
**Gunma 377-8520 (JP)**
• **SAWAMURA, Syota**
**Ichihara-city**
**Chiba 290-8588 (JP)**

(74) Representative: **Gulde & Partner**
**Patent- und Rechtsanwaltskanzlei mbB**
**Wallstraße 58/59**
**10179 Berlin (DE)**

(56) References cited:
**EP-A1- 2 716 723        EP-A2- 1 312 657**
**CN-A- 101 787 248      JP-A- H1 036 784**
**JP-A- H04 372 679      JP-A- H10 140 118**
**JP-A- 2001 098 087      JP-A- 2002 047 460**
**JP-A- 2003 157 737      JP-A- 2003 178 628**
**KR-A- 20170 028 589    US-A1- 2003 138 623**

**Description**

**TECHNICAL FIELD**

The present invention relates to a substrate for adhesive tape, an adhesive tape, and to a manufacturing method thereof. The adhesive tape of the present invention has superior low-temperature resistance, and can be used suitably for bundling electric wires and cables that are subject to low-temperature atmosphere.

**BACKGROUND**

As the various adhesive films such as insulating tape used for various electrical equipment in automobiles, railways, aircraft, ships, houses, factories and the like, a polyvinyl chloride based adhesive film and adhesive tape prepared by applying an adhesive on one side of a substrate made with a resin composition including a polyvinyl chloride resin as the raw material is used, since it has adequate flexibility and elongation properties, and is superior in flame retardancy, mechanical strength, heat distortion resistance, electrical insulating properties, and moldability; and is further relatively inexpensive (Patent Literature 1). Patent Literature 2 describes compositions serving as a primer layer between a soft polyvinyl chloride film and an adhesive layer mainly made of a natural rubber. Such adhesive tapes may be used for electric insulation.

CITATION LIST

PATENT LITERATURE

    Patent Literature 1: JP h11-209718 A
    Patent Literature 2: EP 2716723 A1

**SUMMARY OF THE INVENTION**

**PROBLEMS TO BE SOLVED BY THE INVENTION**

Recently, taking into consideration of the usage in cold region, the polyvinyl chloride based adhesive tape is required to have elongation property so that no cracks occur in the tape when the tape is wound onto the electric wire, which is followed by bending of the electric wire with the tape under - 30°C atmosphere.
As the polyvinyl chloride based adhesive tape provided with an elongation property under low-temperature, an adhesive tape which uses a substrate prepared by blending chlorinated polyethylene and acryl polymer with polyvinyl chloride resin has been suggested. Such substrate is manufactured by a method using a calendar roll (rolling) from the viewpoint of productivity and shape uniformity. When the amount of chlorinated polyethylene or acryl polymer increases, productivity decreases since the substrate becomes more difficult to peel off from the roll in the manufacturing method using the calendar roll (rolling).
In addition to the desire for cost reduction, in the field of automobiles and aircrafts, there is a strong desire for weight reduction, resulting in desire for thinning. However, with the substrate with elongation property in low temperature, when the substrate is thinned, water-borne primers were repelled when the primers were coated.
The present invention has been made by taking the above circumstances into consideration. An object of the present invention is to provide a substrate for adhesive tape which is thin in thickness and can also suppress repelling of a water-borne primer when the primer is being coated.

**MEANS TO SOLVE THE PROBLEM**

That is, the present invention is as follows.

    (1) A substrate for adhesive tape, comprising: 25 to 75 parts by mass of a plasticizer and 5 to 40 parts by mass of an inorganic filler with respect to 100 parts by mass of polyvinyl chloride resin having a mean degree of polymerization of 1200 to 1800; wherein the inorganic filler has a mean particle size of 0.05 to 0.8μm; and the substrate has a thickness of 40 to 80μm.
    (2) The substrate of (1), wherein the plasticizer has a melting point of -40°C or lower.
    (3) An adhesive tape, comprising: the substrate of (1) or (2); and a primer layer and an adhesive layer provided on the substrate in this order.

(4) The adhesive tape of (3), wherein the primer layer comprises a graft copolymer obtained by copolymerizing (meth)acrylic acid ester with natural rubber.

(5) The adhesive tape of (3) or (4), used as a bundling tape.

(6) A method for manufacturing an adhesive tape, comprising the steps of: a primer layer forming step; and an adhesive layer forming step; wherein: in the primer layer forming step, a primer is applied onto the substrate of (1) or (2) to form a primer layer; and in the adhesive layer forming step, an adhesive is applied onto the primer layer to form an adhesive layer.

(7) The method for manufacturing the adhesive tape of (6), wherein the primer comprises a water-borne latex.

(8) The method for manufacturing the adhesive tape of (7), wherein the water borne latex comprises a graft copolymer latex obtained by graft copolymerizing (meth)acrylic acid ester with natural rubber.

## EFFECT OF THE INVENTION

The present inventors have conducted intensive studies to solve the problem of the water-borne primer being repelled with substrates with superior elongation property under low temperature, having 40 $\mu$m to 80 $\mu$m thickness, and have found out that when the mean particle size of the inorganic filler is in the range of 0.05 to 0.8 $\mu$m, repelling of the primer can be suppressed, thereby achieving the present invention. The adhesive tape prepared by using the substrate of the present invention has superior low-temperature resistance, and can be used suitably for bundling electric wires and cables that are subject to low-temperature atmosphere.

## MODE FOR CARRYING OUT THE INVENTION

1. substrate for adhesive tape and manufacturing method thereof

The substrate for adhesive tape of the present invention includes 25 to 75 parts by mass of a plasticizer and 5 to 40 parts by mass of an inorganic filler with respect to 100 parts by mass of polyvinyl chloride resin having a mean degree of polymerization of 1200 to 1800. The mean particle size of the inorganic filler is 0.05 to 0.8 $\mu$m, and the thickness of the substrate is 40 to 80 $\mu$m.

Hereinafter, each of the constitution will be described in detail.

<polyvinyl chloride resin>

The polyvinyl chloride resin of the present invention preferably has a mean degree of polymerization of 1200 to 1800, and polyvinyl chloride resins having different mean degree of polymerization can be used alone, or two or more of these can be used in combination. When the mean degree of polymerization is lower than 1200, the resin becomes too soft during substrate processing, and the film forming property can be deteriorated. When the mean degree of polymerization is higher than 1800, the substrate becomes rigid, and the following property of the tape with the electric wire when the tape is wound onto the electric wire can be deteriorated. The mean degree of polymerization can be measured by GPC.

<plasticizer>

As the plasticizer used in the present invention, any plasticizer which can provide flexibility to the polyvinyl chloride resin can be used. Specifically, DINP (diisononyl phthalate), DHP (diheptyl phthalate), DOP (di-2-ethylhexyl phthalate), n-DOP (di-n-octyl phthalate), DIDP (diisodecyl phthalate), BBP (benzylbutyl phthalate), TOTM (tri-2-ethylhexyl trimellitate), DOA (di-2-ethylhexyl adipate), TCP (tricresyl phosphate), BOA (benzyloctyl adipate), DPCP (diphenyl cresyl phosphate), diisodecyl adipate, epoxidized soybean oil, epoxidized linseed oil, and chlorinated paraffin can be mentioned for example. These plasticizers can be used alone or two or more of these can be used in combination. The plasticizer preferably has a melting point of -40°C or lower. In such case, the tensile elongation of the substrate becomes superior even under -30°C atmosphere.

The content of the plasticizer is 25 to 75 parts by mass, preferably 45 to 75 parts by mass, more preferably 50 to 70 parts by mass, and further preferably 55 to 65 parts by mass. In addition, when the amount of the plasticizer is 25 parts by mass or more, the tensile elongation under -30°C atmosphere tends to become superior. When the content of the plasticizer is 75 parts by mass or less, the substrate would not become too soft, and deterioration of tensile strength as well as deterioration of film forming property can be suppressed. Further, transfer of plasticizer to the adhesive layer is suppressed, thereby suppressing delamination of the adhesive tape from electric wires due to deterioration of adhesive force.

<inorganic filler>

As the inorganic filler used in the present invention, any inorganic particles which can be used as the filler of polyvinyl chloride resin can be used. For example, inorganic particles of aluminum hydroxide, magnesium hydroxide, zirconium hydroxide, calcium hydroxide, potassium hydroxide, barium hydroxide, triphenyl phosphite, ammonium polyphosphate, polyphosphate amide, zirconium oxide, magnesium oxide, zinc oxide, titanium oxide, molybdenum oxide, guanidine phosphate, hydrotalcite, snaketite, zinc borate, anhydrous zinc borate, zinc metaborate, barium metaborate, antimony oxide, antimony trioxide, antimony pentoxide, red phosphorus, talc, alumina, silica, boehmite, bentonite, sodium silicate, calcium silicate, calcium sulfate, calcium carbonate, and magnesium carbonate can be used.

The mean particle size of the inorganic filler is 0.05 to 0.8 $\mu$m, more preferably 0.07 to 0.75 $\mu$m. The mean particle size can be measured by air permeability method, with the procedures below.

(1) A sieve plate is placed in a sample tube having a cross-sectional area of 2 cm$^2$, and an exclusive filter paper is placed thereon. 3 g of the sample is weighed and placed in the sample tube, and a sheet of filter paper is placed thereon. The sample layer is pressurized and filled with a plunger to adjust the thickness of the sample layer to 1.35 cm.
(2) Grease is applied onto the fitting face of the sample tube and the sample tube is set it in a measuring device. The pressure difference $\Delta$P between the sample layers at both ends is set to 500 mmH$_2$O, and the time required for 5 cc of air to pass through the sample layer is measured.
(3) Here, regarding products with a surface area of 5000 cm$^2$/g or less, the thickness of the sample layer is 1.20 cm, and the pressure difference $\Delta$P between both ends of the sample layer is 200 mmH$_2$O.
(4) The mean particle size of the sample is calculated from the following formula.

[formula 1]

$$d_m = \frac{6}{\rho \; S_w} \times 10^4$$

wherein;

$$S_w = \frac{14}{\rho} \sqrt{\frac{\Delta P \; A \; t}{\eta \; L \; Q} \cdot \frac{\varepsilon^3}{(1 - \varepsilon)^2}}$$

$$\varepsilon = 1 - \frac{W}{\rho \; A \; L}$$

here,

dm : mean particle size ($\mu$m)
Sw : surface area of powder (cm$^2$/g)
$\varepsilon$ : porosity of sample filled layer
$\rho$ : density of powder (g/cm$^3$) (=2.70)
$\eta$ : viscosity coefficient of air (g/cm·sec) (=181 $\times$ 10$^{-6}$ at 20°C)
L : thickness of sample layer (cm) (=1.35 or 1.20)
Q : sample layer permeating fluid volume (cc) (=5)
$\Delta$P : pressure difference between the sample layers at both ends (g/cm$^2$) (=50 or 20)
A : cross sectional area of sample layer (cm$^2$) (=2)
t : time required for Qcc of air to pass through sample layer (sec)

W : weight of sample (g) (=3)

The content of the inorganic filler is 5 to 40 parts by mass, preferably 10 to 35 parts by mass, and more preferably 15 to 30 parts by mass.

<other additives>

The polyvinyl chloride based substrate of the present invention can include, in a range which does not impair the effect of the present invention, a modifier, and colorant, stabilizer, antioxidant, UV absorber, lubricant and the like as other additives.

As the modifier for example, vinyl chloride-vinyl acetate copolymer, vinyl chloride-ethylene copolymer, vinyl chloride-propylene copolymer, chlorinated polyethylene, ethylene-vinyl acetate copolymer, acrylonitrile-butadiene-styrene copolymer, methyl methacrylate-butadiene-styrene copolymer, acrylonitrile-butadiene copolymer, thermoplastic polyurethane, polyester based thermoplastic elastomer and the like can be mentioned. These modifiers can be used alone, or two or more of these can be used in combination.

Manufacturing method of substrate for adhesive tape>

The substrate for adhesive tape of the present invention can be obtained by melting and kneading a composition prepared by mixing polyvinyl chloride resin, plasticizer, inorganic filler, and other additives. The melt-kneading method is not particularly limited. Here, various mixers and kneaders equipped with a heating device such as a twin-screw extruder, continuous and batch kneaders, rolls, and a Banbury mixer can be used. The composition is mixed so as to disperse uniformly, and the mixture obtained is molded into a substrate by a common molding method such as calendar method, T-die method, inflation method and the like. As the molding machine, a calendar molding machine is preferable in terms of productivity, color exchange, and uniformity of the shape. As the roll arrangement in the calendar molding, known arrangement such as L-shaped arrangement, inversed L-shaped arrangement, and Z-shaped arrangement can be used. In addition, the temperature of the rolls are set usually to 150 to 200°C, preferably to 155 to 190°C. The thickness of the substrate is usually 40 to 80$\mu$m, preferably 50 to 75$\mu$m, and more preferably 50 to 70$\mu$m.

2. adhesive tape and manufacturing method thereof

The adhesive tape of the present invention comprises the afore-mentioned substrate for adhesive tape, and a primer layer and an adhesive layer is provided on the substrate for adhesive tape in this order. By using the substrate for adhesive tape, the repelling of the primer on the substrate is suppressed even when a primer including a water-borne latex is applied. Therefore, a uniform primer layer can be formed on the substrate. Accordingly, an adhesive tape having superior adhesion property between the substrate and the adhesive layer can be manufactured with high productivity.

The adhesive tape can be manufactured by a method comprising a primer layer forming step and an adhesive layer forming step. Hereinafter, each of the steps are explained.

<primer layer forming step>

In the primer layer forming step, a primer is applied onto the substrate to form the primer layer. The primer is preferably a water-borne primer including a water-borne latex. With a conventional substrate, the water-borne primer would be repelled by the substrate when being applied onto the substrate. Accordingly, it was difficult to form the primer layer uniformly. By using the substrate of the present invention, repelling of the primer on the substrate is suppressed even when the water-borne primer is applied.

The water-borne latex of the primer preferably includes a natural rubber latex including a component derived from natural rubber, and more preferably includes a graft polymer latex obtained by graft copolymerization of (meth)acrylic acid ester (for example, methyl methacrylate) with natural rubber. Further, water-borne latex preferably includes acrylonitrile butadiene copolymer emulsion.

Regarding the graft copolymer latex, the ratio is preferably in the range of 70 to 50 mass% of natural rubber and 30 to 50 mass% or (meth)acrylic acid ester. When the ratio of the (meth)acrylic acid ester in the graft copolymer is less than 30 mass%, the adhesion property between the (meth)acrylic acid ester and the film substrate becomes inferior, thereby resulting in cases where the adhesive tape delaminates. Further, when the ratio of the (meth)acrylic acid ester exceeds 50 mass%, the primer composition itself hardens, thereby being unable to follow the deformation of the film substrate. This may also result in cases where the adhesive tape delaminates.

As the afore-mentioned acrylonitrile butadiene copolymer emulsion, medium nitrile type (25 to 30% of nitrile content), medium-high nitrile type (31 to 35% of nitrile content), high nitrile type (36 to 43% of nitrile content) and the like can be mentioned. These acrylonitrile butadiene copolymer emulsions can be used alone, or two or more of these can be used in combination.

The afore-mentioned primer is applied onto the substrate and dried, thereby forming the primer layer. The primer layer includes a resin obtained by removing water from the latex or the emulsion (component derived from natural rubber, graft copolymer, acrylonitrile butadiene copolymer).

As the method for coating the primer, gravure method, spray method, kiss roll method, bar method, knife method and the like can be mentioned. The thickness of the primer is usually 0.1 to 1$\mu$m, preferably 0.3 to 0.5$\mu$m.

<adhesive layer forming step>

In the adhesive layer forming step, adhesive is applied onto the primer layer to form the adhesive layer.

Regarding the adhesive layer in the present invention, the adhesive layer preferably contains 50 to 150 parts by mass (solids) of a tackifier resin emulsion, with respect to 100 parts by mass (solids) of a rubber component comprising a mixture of a natural rubber latex and a synthetic rubber latex.

As the rubber component of the mixture comprising the natural rubber latex and the synthetic rubber latex, natural rubber-(meth)acrylic acid ester (for example, methyl methacrylate) copolymer latex, styrene-butadiene copolymer latex, acrylonitrile-butadiene copolymer latex, (meth)acrylic acid ester (for example, methyl methacrylate)-butadiene copolymer latex and the like can be mentioned. These can be used alone or two or more of these can be used in combination.

The tackifier resin emulsion can be selected by taking the softening point and the compatibility with each of the components into consideration. For example, terpene resin, rosin resin, hydrogenated rosin resin, coumarone/indene resin, styrene based resin, aliphatic petroleum resin, alicyclic petroleum resin, terpene-phenol resin, xylene based resin, other aliphatic hydrocarbon resin or aromatic hydrocarbon resin and the like can be mentioned. These resins can be used alone, or two or more of these can be used in combination.

As the method for coating the adhesive, comma method, lip die method, gravure method, roll method and the like can be mentioned. The thickness of the adhesive layer varies depending on the purpose and use, and is usually 5 to 50$\mu$m, more preferably 10 to 30$\mu$m.

<post-processing step>

After the adhesive layer forming step, moisture is thoroughly dried by a drying oven, and then the adhesive surface and a releasing paper are laminated to obtain an adhesive film. Here, after the adhesive layer is dried, the resultant object can be rolled into a tape log form and cut in an arbitrary width to obtain an adhesive tape.

3. physical property and use of adhesive tape

The adhesive tape of the present invention is characterized in that the tensile elongation under -30°C atmosphere is 80% to 220%.

The adhesive tape of the present invention has superior low-temperature resistance, and can be used suitably for bundling electric wires and cables that are subject to low-temperature atmosphere.

**EXAMPLES**

Hereinafter, the present invention will be explained in further detail with reference to the Examples. Here, these examples are merely presented as an example, and shall not limit the present invention. The ratio are provided by mass, unless otherwise noted.

1. preparation of tape samples for Examples and Comparative Examples

(1) preparation of substrate

Polyvinyl chloride resin, plasticizer, and inorganic filler were melt and kneaded with the formulation shown in Table 1 and Table 2 using a Banbury mixer, thereby dispersing the ingredients uniformly. Substrates having a thickness shown in the Tables were prepared using a calendar molding machine at a roll temperature of 165°C.

(2) formation of primer layer

Primers with the formulation shown in the Tables were applied on the substrates by gravure method followed by drying, thereby forming the primer layer.

(3) formation of adhesive layer

The adhesive was coated on the primer layer by comma method, followed by drying, thereby forming the adhesive layer. The resultant object was rolled into a tape log form and was cut in a width of 10 mm to give a tape sample. As the adhesive, a formulation comprising 40 parts of acryl modified natural rubber latex (MMA/NR copolymer latex, MMA/NR composition ratio = 30/70, available from Regitex, MG-40S), 60 parts of styrene-butadiene copolymer latex (styrene/butadiene composition ratio = 25/75, available from JSR Corporation, T-093A), and 120 parts of tackifier resin emulsion (C5 petroleum resin emulsion, available from ARAKAWA CHEMICAL INDUSTRIES, LTD., AP2100NT) was used.

2. evaluation

In accordance with the procedure and criteria provided in "4. evaluation procedure, criteria", the afore-mentioned substrates and tape samples were evaluated. Results are shown in Table 1 and Table 2.

[Table 1]

| Table 1 | item | | product name | unit | Examples | | | | | | |
|---|---|---|---|---|---|---|---|---|---|---|---|
| | | | | | 1 | 2 | 3 | 4 | 5 | 6 | 7 |
| formulation | substrate | polyvinyl chloride resin | mean degree of polymerization 1300 | parts by mass | 100 | 100 | 100 | | 100 | 100 | 100 |
| | | | mean degree of polymerization 1700 | parts by mass | | | | 100 | | | |
| | | plasticizer | ADK CIZER D-32 (melting point -14°C) | parts by mass | 60 | 60 | 60 | 60 | 60 | 60 | |
| | | | tri-2-ethylhexyl trimellitate (melting point -50°C) | parts by mass | | | | | | | 60 |
| | | | diisononyl phthalate (melting point -45°C) | parts by mass | | | | | | | |
| | | inorganic filler | SOFTON 3200 (mean particle size 0.7μm) | parts by mass | 30 | | | | 30 | 30 | |
| | | | CALSEEDS P (mean particle size 0.15μm) | parts by mass | | 30 | | 30 | | | 30 |
| | | | CALSEEDS PL-10 (mean particle size 0.09μm) | parts by mass | | | 30 | | | | |
| | primer | water-borne latex | KT-4612-A | parts by mass | 100 | 100 | 100 | 100 | 100 | 100 | 100 |
| | | | Regitex MG 40 | parts by mass | | | | | | | |
| | | | Nipol 1562 | parts by mass | | | | | | | |
| | thickness of substrate | | | μm | 70 | 70 | 70 | 70 | 45 | 75 | 70 |
| evaluation | primer repelling | | | visual observation | Good | Good | Good | Good | Good | Good | Good |
| | tensile elongation (under -30°C atmosphere) | | | % | 85 | 95 | 110 | 140 | 80 | 90 | 160 |
| | storage modulus (under -30°C atmosphere) | | | ×10^9 Pa | 1.4 | 1 | 0.08 | 1.3 | 1 | 1.3 | 0.9 |
| | terminal peeling | | | Good/Not Good | Good | Good | Good | Good | Good | Good | Good |
| | roll peeling | | | Good/Not Good | Good | Good | Good | Good | Good | Good | Good |

[Table 1 (continued)]

| Table 1 | | item | product name | unit | Examples | | | | | |
|---|---|---|---|---|---|---|---|---|---|---|
| | | | | | 8 | 9 | 10 | 11 | 12 | 13 |
| formulation | substrate | polyvinyl chloride resin | mean degree of polymerization 1300 | parts by mass | 100 | 100 | 100 | | 100 | 100 |
| | | | mean degree of polymerization 1700 | parts by mass | | | | 100 | | |
| | | plasticizer | ADK CIZER D-32 (melting point -14°C) | parts by mass | | | | | | |
| | | | tri-2-ethylhexyl trimellitate (melting point -50°C) | parts by mass | | | | | | |
| | | | diisononyl phthalate (melting point -45°C) | parts by mass | 60 | 60 | 60 | 60 | 60 | 60 |
| | | inorganic filler | SOFTON 3200 (mean particle size 0.7µm) | parts by mass | | 30 | | | | |
| | | | CALSEEDS P (mean particle size 0.15µm) | parts by mass | 30 | | | 30 | 30 | 30 |
| | | | CALSEEDS PL-10 (mean particle size 0.09µm) | parts by mass | | | 30 | | | |
| | primer | water-borne latex | KT-4612-A | parts by mass | 100 | 100 | 100 | 100 | 100 | |
| | | | Regitex MG 40 | parts by mass | | | | | | 40 |
| | | | Nipol 1562 | parts by mass | | | | | | 60 |
| | thickness of substrate | | | µm | 70 | 70 | 70 | 70 | 75 | 70 |
| evaluation | primer repelling | | | visual observation | Good | Good | Good | Good | Good | Good |
| | tensile elongation (under -30°C atmosphere) | | | % | 180 | 145 | 190 | 210 | 220 | 210 |
| | storage modulus (under -30°C atmosphere) | | | $\times 10^9$ Pa | 0.8 | 1 | 0.7 | 1.2 | 0.9 | 0.7 |
| | terminal peeling | | | Good/Not Good | Good | Good | Good | Good | Good | Good |
| | roll peeling | | | Good/Not Good | Good | Good | Good | Good | Good | Good |

[Table 2]

EP 3 680 302 B1

| Table 2 | item | product name | unit | Comparative Examples | | | | | | | |
|---|---|---|---|---|---|---|---|---|---|---|---|
| | | | | 1 | 2 | 3 | 4 | 5 | 6 | 7 | 8 |
| formulation / substrate | polyvinyl chloride resin | mean degree of polymerization 1000 | parts by mass | | 100 | | | | | | |
| | | mean degree of polymerization 1300 | parts by mass | 100 | | | 100 | 100 | 100 | 100 | 100 |
| | | mean degree of polymerization 2000 | parts by mass | | | 100 | | | | | |
| | plasticizer | ADK CIZER D-32 (melting point -14°C) | parts by mass | 60 | 60 | 60 | 20 | 80 | 60 | 60 | 60 |
| | inorganic filler | SOFTON 2200 (mean particle size 1μm) | parts by mass | 30 | | | | | | | |
| | | CALSEEDS P (mean particle size 0.15μm) | parts by mass | | 30 | 30 | 30 | 30 | 3 | 80 | 30 |
| | primer / water-borne latex | KT-4612-A | parts by mass | 100 | 100 | 100 | 100 | 100 | 100 | 100 | 100 |
| thickness of substrate | | | μm | 70 | 70 | 70 | 70 | 70 | 70 | 70 | 100 |
| evaluation | primer repelling | | visual observation | Not Good | Good | Good | Good | Good | Good | Not Good | Good |
| | tensile elongation (under -30°C atmosphere) | | % | 85 | 60 | 140 | 80 | 90 | 160 | 180 | 210 |
| | storage modulus (under -30°C atmosphere) | | ×10^9 Pa | 1.6 | 0.08 | 3 | 1 | 1.3 | 0.9 | 0.8 | 3.5 |
| | terminal peeling | | Good/Not Good | Not Good | Good | Not Good | Not Good | Good | Good | Not Good | Not Good |
| | roll peeling | | Good/Not Good | Good | Not Good | Good | Good | Not Good | Not Good | Good | Good |

The details of the materials shown in the Tables are as follows.

ADK CIZER D-32 : epoxidized fatty acid octyl ester, available from ADEKA Corporation

SOFTON 2200, SOFTON 3200 : calcium carbonate, available from Bihoku Funka Kogyo Co.,Ltd.

CALSEEDS P, CALSEEDS PL-10 : calcium carbonate, available from Konoshima Chemical Co.,Ltd.

KT-4612-A : an emulsion mixture of graft copolymer latex obtained by graft copolymerizing natural rubber with methyl methacrylate and acrylonitrile butadiene copolymer emulsion, available from Emulsion Technology Co., Ltd.

Regitex MG40 : modified natural rubber latex obtained by graft copolymerizing monomethyl methacrylate to "natural rubber latex" as the base material, available from Regitex

Nipol 1562 : acrylonitrile-butadiene based latex (medium-high nitrile), available from Zeon Corporation

3. discussion

All of the Examples showed superior results in all of the evaluation items.

In Comparative Example 1, mean particle size of the inorganic filler was too large. Accordingly, primer repelling and terminal peeling occurred, and the storage modulus at - 30°C became too large.

In Comparative Example 2, mean degree of polymerization of the polyvinyl chloride resin was too small. Accordingly, tensile elongation at -30°C became too small, and the roll delaminated.

In Comparative Example 3, mean degree of polymerization of the polyvinyl chloride resin was too large. Accordingly, storage modulus at -30°C became too large, and terminal peeling occurred.

In Comparative Example 4, the amount of plasticizer was too small, and thus terminal peeling occurred.

In Comparative Example 5, the amount of plasticizer was too large, and thus the roll delaminated.

In Comparative Example 6, the amount of inorganic filler was too small, and thus the roll delaminated.

In Comparative Example 7, the amount of inorganic filler was too large, and thus primer repelling and terminal peeling occurred.

In Comparative Example 8, the substrate was too thick. Accordingly, storage modulus at -30°C became too large, and terminal peeling occurred.

4. evaluation procedure, criteria

<primer repelling>

Primer was applied onto the substrate using an applicator, with the application speed of 10m/min and a thickness of $4\mu m$. The condition of the primer was observed.

Good: no change observed with the primer on the substrate after 3 seconds immediately after application

Not Good: primer repelled from the substrate and circular dent was observed after 3 seconds immediately after application

<tensile elongation under -30°C atmosphere>

Tensile strength was measured in accordance with JIS C 2107. Measurement was carried out in an evaluation test chamber set at a temperature of -30±2°C. Measurement results were evaluated in the following manner.

Good: tensile elongation is 80% or higher

Not Good: tensile elongation is below 80%

<storage modulus under -30°C atmosphere (E')>

"Storage modulus" was obtained by dynamic viscoelasticity measurement. Tape sample for measurement was stored in an evaluation test chamber set at a temperature of -30±2°C for 24 hours or longer, and the apparatus provided below was used to apply stress and strain in the tensile direction at a frequency of 1Hz. The storage modulus was measured at -30°C.

Apparatus : dynamic viscoelasticity measuring device RSA3, available from TA Instruments

Good: storage modulus is $1.5 \times 10^9$ Pa or lower

Not Good: storage modulus is above $1.5 \times 10^9$ Pa

<terminal peeling>

The tape sample was wound onto an electric wire in a half-lapped manner, and the terminal portion was visually observed for occurrence of terminal peeling when the end of the wounded adhesive tape was cut.

Good : no terminal peeling occurred at the terminal portion

Not Good : terminal peeling occurred at the terminal portion

<calendar roll peeling>

Calendar molding was carried out with a roll temperature of 165°C. The condition of peeling from the substrate roll was observed and evaluated as follows.
Good: peeled off without sticking to the roll
Not Good: sticks onto the roll and difficult to peel off or does not peel off

**Claims**

1.   A substrate for adhesive tape, comprising:

    25 to 75 parts by mass of a plasticizer and 5 to 40 parts by mass of an inorganic filler with respect to 100 parts by mass of polyvinyl chloride resin having a mean degree of polymerization of 1200 to 1800 measured by GPC; wherein
    the inorganic filler has a mean particle size of 0.05 to 0.8 $\mu$m measured by air permeability method according to the description; and
    the substrate has a thickness of 40 to 80 $\mu$m.

2.   The substrate of Claim 1, wherein the plasticizer has a melting point of -40°C or lower.

3.   An adhesive tape, comprising:

    the substrate of Claim 1 or 2; and
    a primer layer and an adhesive layer provided on the substrate in this order.

4.   The adhesive tape of Claim 3, wherein the primer layer comprises a graft copolymer obtained by copolymerizing (meth)acrylic acid ester with natural rubber.

5.   Use of the adhesive tape of Claim 3 or 4 as a bundling tape.

6.   A method for manufacturing an adhesive tape, comprising the steps of:

    a primer layer forming step; and
    an adhesive layer forming step; wherein:

        in the primer layer forming step, a primer is applied onto the substrate of Claim 1 or 2 to form a primer layer; and
        in the adhesive layer forming step, an adhesive is applied onto the primer layer to form an adhesive layer.

7.   The method for manufacturing the adhesive tape of Claim 6, wherein the primer comprises a water-borne latex.

8.   The method for manufacturing the adhesive tape of Claim 7, wherein the water borne latex comprises a graft copolymer latex obtained by graft copolymerizing (meth)acrylic acid ester with natural rubber.

**Patentansprüche**

1.   Substrat für Klebeband, umfassend:

    25 bis 75 Masseteile eines Weichmachers und 5 bis 40 Masseteile eines anorganischen Füllstoffs bezogen auf 100 Masseteile Polyvinylchloridharz mit einem mittleren Polymerisationsgrad von 1200 bis 1800, gemessen mittels GPC; wobei
    der anorganische Füllstoff eine mittlere Partikelgröße von 0,05 bis 0,8 $\mu$m aufweist, gemessen mittels Luftdurchlässigkeitsverfahren gemäß der Beschreibung; und
    das Substrat eine Dicke von 40 bis 80 $\mu$m aufweist.

**2.** Substrat nach Anspruch 1, wobei der Weichmacher einen Schmelzpunkt von -40 °C oder niedriger aufweist.

**3.** Klebeband, umfassend:

das Substrat nach Anspruch 1 oder 2; und
eine Grundierungsschicht und eine Klebeschicht, die in dieser Reihenfolge auf dem Substrat vorgesehen sind.

**4.** Klebeband nach Anspruch 3, wobei die Grundierungsschicht ein Pfropfcopolymer umfasst, das durch Copolymerisation von (Meth)acrylsäureester mit Naturkautschuk erhalten ist.

**5.** Verwendung des Klebebands nach Anspruch 3 oder 4 als Bündelungsband.

**6.** Verfahren zur Herstellung eines Klebebands, das folgende Schritte umfasst:

einen Grundierungsschichtausbildungsschritt; und
einen Klebeschichtausbildungsschritt; wobei:

in dem Grundierungsschichtausbildungsschritt ein Grundiermittel auf das Substrat nach Anspruch 1 oder 2 aufgebracht wird, um eine Grundierungsschicht auszubilden; und
in dem Klebeschichtausbildungsschritt ein Klebstoff auf die Grundierungsschicht aufgebracht wird, um eine Klebeschicht auszubilden.

**7.** Verfahren zur Herstellung des Klebebands nach Anspruch 6, wobei das Grundiermittel einen Latex auf Wasserbasis umfasst.

**8.** Verfahren zur Herstellung des Klebebands nach Anspruch 7, wobei der Latex auf Wasserbasis einen Pfropfcopolymerlatex umfasst, der durch Pfropfcopolymerisation von (Meth)acrylsäureester mit Naturkautschuk erhalten wird.

**Revendications**

**1.** Substrat pour ruban adhésif, comprenant :

25 à 75 parties en masse d'un plastifiant et 5 à 40 parties en masse d'une charge inorganique par rapport à 100 parties en masse de résine de polychlorure de vinyleprésentant un degré moyen de polymérisation de 1 200 à 1 800 mesuré par GPC ; dans lequel
la charge inorganique présente une taille de particule moyenne de 0,05 à 0,8 $\mu$m mesurée par une méthode de perméabilité à l'air selon la description ; et
le substrat présente une épaisseur de 40 à 80 $\mu$m.

**2.** Substrat selon la revendication 1, dans lequel le plastifiant présente un point de fusion de -40°C ou inférieur.

**3.** Ruban adhésif, comprenant :

un substrat selon la revendication 1 ou 2 ; et
une couche de primaire et une couche d'adhésif pourvues sur le substrat dans cet ordre.

**4.** Ruban adhésif selon la revendication 3, dans lequel la couche de primaire comprend un copolymère greffé obtenu par la copolymérisation d'un ester d'acide méthacrylique avec un caoutchouc naturel.

**5.** Utilisation du ruban adhésif selon la revendication 3 ou 4 servant de ruban d'empaquetage.

**6.** Procédé destiné à fabriquer un ruban adhésif, comprenant les étapes suivantes :

une étape de formation de couche de primaire ; et
une étape de formation de couche d'adhésif ; dans lequel :

dans l'étape de formation de couche de primaire, un primaire est appliqué sur le substrat selon la revendication 1 ou 2 afin de former une couche de primaire ; et
dans l'étape de formation de couche d'adhésif, un adhésif est appliqué sur la couche de primaire afin de former une couche d'adhésif.

**7.** Procédé de fabrication de ruban adhésif selon la revendication 6, dans lequel le primaire comprend un latex à base d'eau.

**8.** Procédé de fabrication de ruban adhésif selon la revendication 7, dans lequel le latex à base d'eau comprend un latex de copolymère greffé obtenu par la copolymérisation greffée d'un ester d'acide (méth)acrylique avec un caoutchouc naturel.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11209718 A
- EP 2716723 A1